# EUROPEAN PATENT APPLICATION

(11) **EP 4 752 394 A1**
(43) Date of publication of application: **03.06.2026**
(21) Application number: 25178430.2
(22) Date of filing: 23.05.2025
(51) Int. Cl.: F16F 9/18, F16F 9/348

(54) **VARIABLE BLEED FOR BASE VALVE OF A TWIN-TUBE DAMPER**

(30) Priority: 29.11.2024 CN 202411748022
(71) Applicant: BeijingWest Industries Co. Ltd., 102400 Beijing (CN)
(72) Inventor: FRANCZYK, Bartlomiej, 31-066 Ul. Skawinska 18/14, Kraków (PL); KNAPCZYK, Marcin, 31-261 ul. Rusznikarska 14/120, Kraków (PL); SEMKOWICZ, Milosz, 34-200 ul. Billy Wildera 14/20, Sucha Beskidzka (PL)
(74) Representative: Lukaszyk, Szymon

(57) **Abstract**

In general terms, this invention provides a twin-tube damper having an outer and inner tube creating a chamber between the inner and outer tubes for oil. A piston and rod move within the inner tube in response to driving conditions. A base valve assembly is positioned between the inner tube and outer tube. The base valve assembly includes a cylinder end with a first end and a second end. Openings extend through the cylinder end and are in fluid communication between the inner tube and the outer tube. The base valve assembly first end defines a seal surface and an intake disc is mounted adjacent the seal surface. The seal surface has a lowered section. A compression relief valve assembly is positioned adjacent the second end. When pressure is low in the inner tube, the gap between the seal surface and the intake disc allows additional oil flow paths through the base valve assembly. The gap is incrementally closed by the intake disc when pressure increases in the inner tube.

## Description

### Technical Field

This invention generally relates to dampers and, in particular, to vehicle dampers.

### Background of the Invention

The most common type of suspension damper used in modern vehicles is the twin-tube, passive hydraulic damper. This type of damper is made of two concentric tubes. The inner one is the working cylinder in which the piston moves, while the outer one is the housing and the oil reservoir. A fixed hydraulic valve, called the base valve, is in the lower section of the damper, between the two concentric tubes. When the damper moves, the base valve controls the oil flow between the cylinder tube and the reservoir chamber.

In a typical twin-tube damper, the base valve assembly has a valve body (a.k.a. cylinder end) and a pressure relief valve for controlling the oil flow from the inner or cylinder tube to the outer tube or reservoir chamber in the compression stroke. Intake disc present on the opposite side of a valve body acts as a check valve that allows for quick oil refilling of the cylinder tube in the rebound (extension) stroke.

In a conventional base valve, the intake disc only serves as a check valve. Its purpose is to prevent oil from flowing through the outer ports of the cylinder end during damper compression and to enable it during extension to allow efficient refilling of the cylinder. The check valve may consist of a single intake disk or contain several of them. It can also be equipped with an additional spring. The first disk from the cylinder end can be equipped with slots (fixed orifices).

The cylinder end is equipped with flat, circumferential seats to ensure proper check valve sealing during compression. Under the influence of pressure, the intake disc(s) are pressed against them, and oil flow is not possible. Importantly, in such a case, all seats are nominally on the same plane.

Some vehicle applications require high damping forces in the rebound and compression stroke. Too much damping in compression may, however, negatively affect body isolation from low-amplitude inputs, such as slow speeds, small waves on main roads, and road graininess.

The base valve of the present invention helps increase ride quality and reduce harshness. Variable bleed allows shaping the damping characteristics in the initial phase of the compression movement, obtaining a smoother damper operation and improved ride feel.

### Summary of the invention

In general terms, this invention provides a twin-tube damper having an outer and inner tube creating a chamber between the inner and outer tubes for oil and gas. A piston and rod move within the inner tube in response to driving conditions. A base valve assembly is positioned between the inner tube and outer tube. The base valve assembly includes a cylinder end with a first end and a second end. Openings extend through the cylinder end and are in fluid communication between the inner tube and the outer tube. The base valve assembly first end defines a seal surface and an intake disc is mounted adjacent the seal surface. The seal surface has a lowered section. A compression relief valve assembly is positioned adjacent the second end. When pressure is low in the inner tube and the outer tube, the gap between the seal surface and the intake disc allows additional oil flow paths through the base valve assembly. The gap is incrementally closed by the intake disc when pressure increases in the inner tube.

These and other features and advantages of this invention will become more apparent to those skilled in the art from the detailed description of a preferred embodiment. The drawings that accompany the detailed description are described below.

### Brief description of the drawings

Figure 1 is a partial cutaway perspective view of the twin-tube damper of the present invention.
Figure 2 is an exploded view of the base valve assembly of the present invention.
Figure 3 is a cross-sectional view of the base valve assembly.
Figure 4 is an enlarged view of the middle seat of the base valve assembly.
Figure 5 is a cross-sectional view of the base valve assembly.
Figure 6A is a graph illustrating the flow vs. pressure characteristics of the present invention, and Figure 6B is a graph showing force vs displacement characteristics of the damper including the base valve assembly of present invention.

### Detailed Description

The twin-tube damper with a variable bleed base valve of the present invention is shown generally at 10. With the exception of the variable bleed base valve, the twin-tube damper shown at 12 is a well-known damper. It has an outer tube 14 and an inner tube or cylinder tube 16. A piston 18 and rod 20 move within the inner tube in response to driving conditions. A top seal assembly 21 closes the two tubes 14 and 16. A lower mount 22 is shown and it will be understood that an upper mount (not shown) is also provided to mount the twin-tube damper within a vehicle.

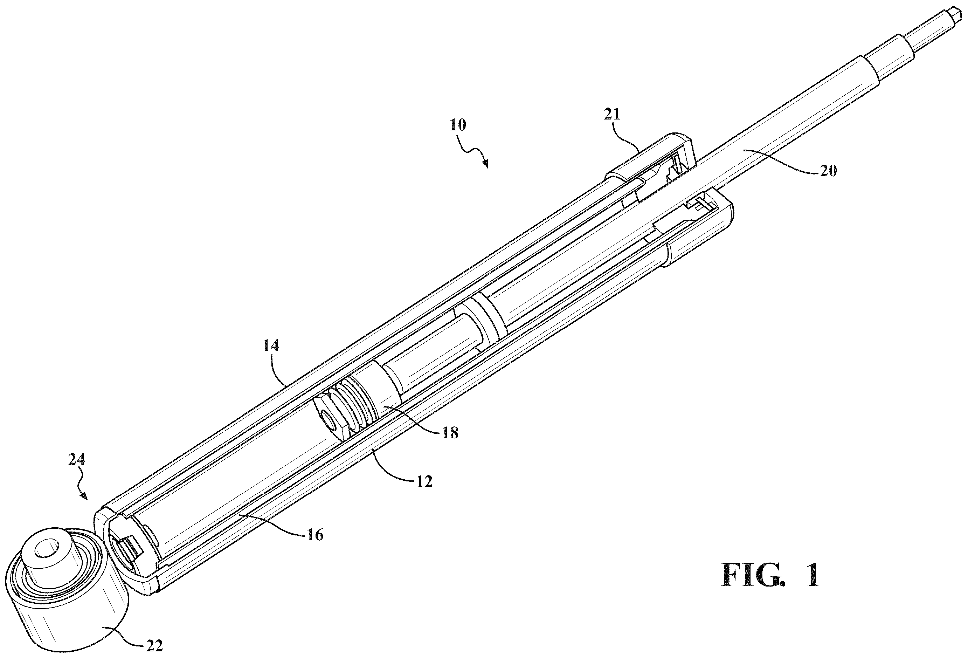

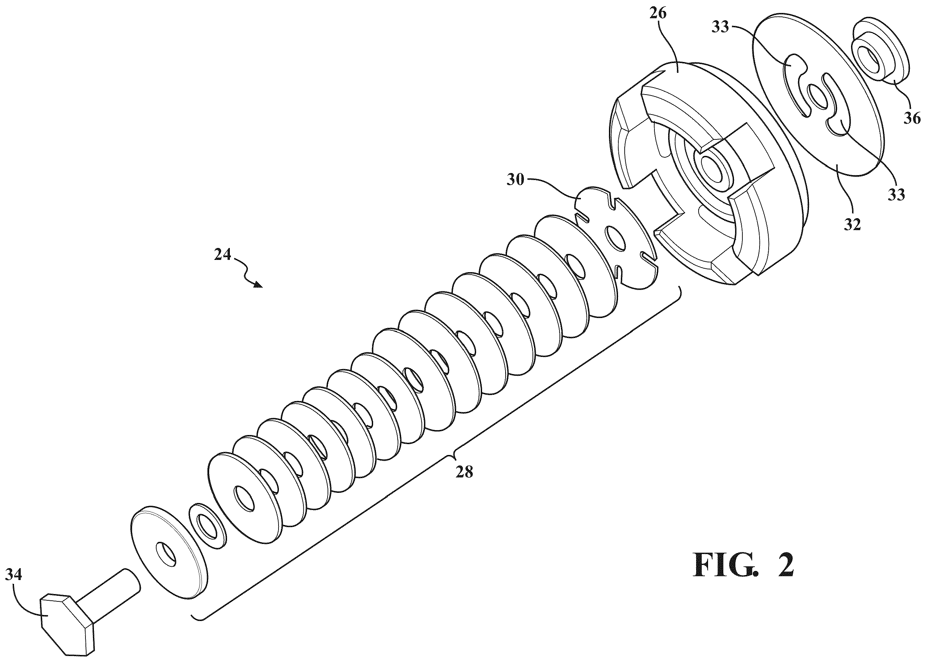

With reference to figures 1 through 5, the base valve assembly of the present invention is generally shown at 24. The base valve assembly 24 has a cylinder end 26. A compression relief valve assembly 28, which includes several discs and a bleed disk with slots 30, is mounted adjacent to cylinder end 26. The discs are thick deflective discs and the slots are relatively narrow which is standard to provide high damping and a good primary ride. Mounted to the opposite side of the cylinder end 26 is an intake disc or rebound check valve 32. The intake disc 32 has slots 33 for oil flow. As illustrated, a bolt 34 and nut 36 connect them together to form the base valve assembly 24.

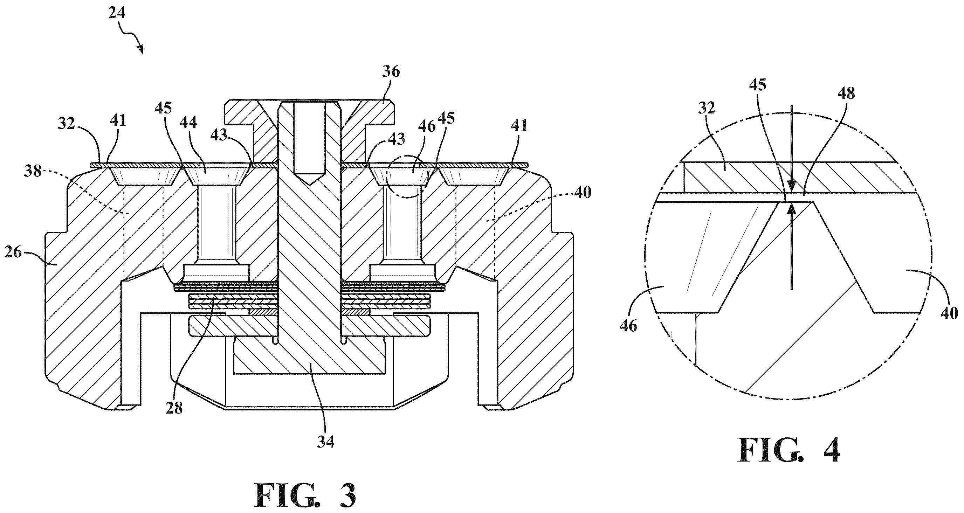

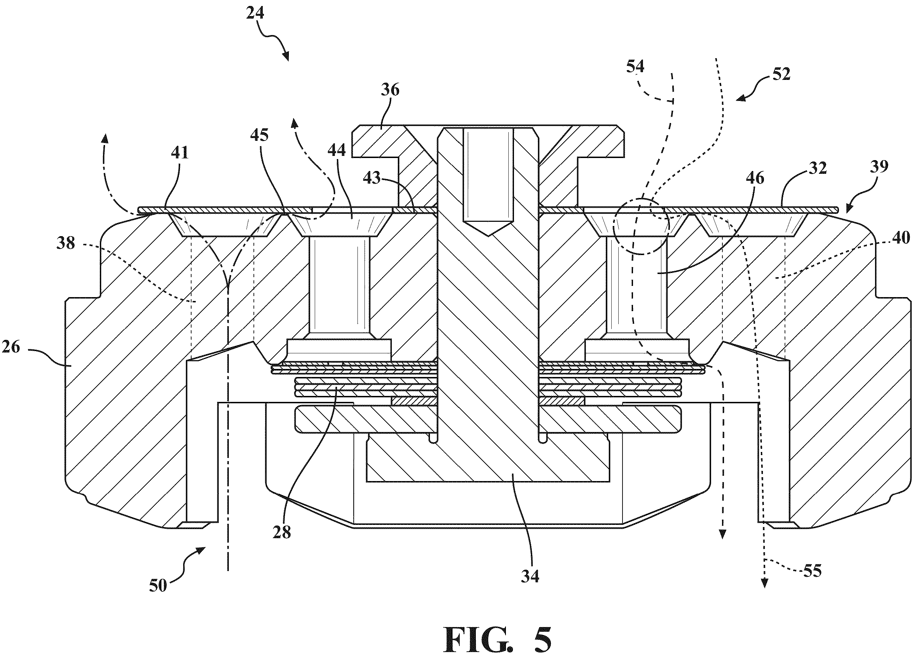

With reference to figures 3 and 4, the base valve assembly 24 includes windows 38 and 40 and holes 44 and 46. As shown in figure 5, windows 38 and 40 and holes 44 and 46 allow oil to flow between tubes 14 and 16. In general, during the rebound stroke, oil flows through windows 38 and 40. On the compression stroke, the oil flows through holes 44 and 46.

The base valve assembly 24 has a surface that generally forms a seat 39 which has an outer seat 41, an inner seat 43 and a middle seat 45. The middle seat 45 of the base valve assembly 24 has a lowered section or gap 48 relative to the inner 43 and outer 41 seats, so that in an unloaded state, there is a gap 48 between that seat and the intake disc 32, see figure 4. The gap 48 defines a variable orifice.

As shown in Figure 5, in the rebound stroke the oil flow is shown generally at 50 and flows mainly through the windows 38,40 by deflecting the intake disc 32. This is a conventional base valve operation and the gap 48 has no major impact on damper operation in the rebound stroke.

When the damper is compressed, pressure rises in the inner tube 16 between the base valve assembly 24 and the piston 18. In effect, the oil flows from the compression chamber to the reservoir chamber as shown generally at 52. Flow path 54 is a conventional one and includes flow through slots 33 of the intake disc 32, holes 44 and 46 of the cylinder end 26 and the compression relief valve assembly 28. Additionally, the oil flows through the gap 48 and then through the windows 38,40 as shown by arrow 55. This condition isolates the vehicle from road surface conditions, such as for example from a rough road surface. However, as the pressure difference between the cylinder and reservoir increases, the intake disc 32 bends towards the gap 48, continually reducing the gap 48 until it is completely closed.

Discs of compression relief valve assembly 28 begin to deflect when the pressure reaches a preset value. If the velocity and pressure are low, the oil flow 54 is realized only through the orifice disc 30 and discs of compression relief valve assembly 28 are not deflected. In such case the impact of the flow 55 on the total flow 52 is significant. Therefore, the effect of the variable bleed is most significant for pressures/velocities lower than the opening pressure/velocity of the discs of compression relief valve assembly 28.

When you use a standard compression relief valve assembly 28 with narrow slots and lots of thick deflective discs, you provide high damping and a good primary ride. But you make the isolation and ride comfort generally worse. The disclosed invention provides additional flow through the base valve assembly 24 to improve the vehicle ride under low pressure low velocity conditions. The additional oil flow though gap 48 happens at the beginning of the compression stroke and at low velocities to improve the smoothness of a vehicle. But this oil flow path is intended to close when the velocity or the stroke amplitude rises and pressure increases.

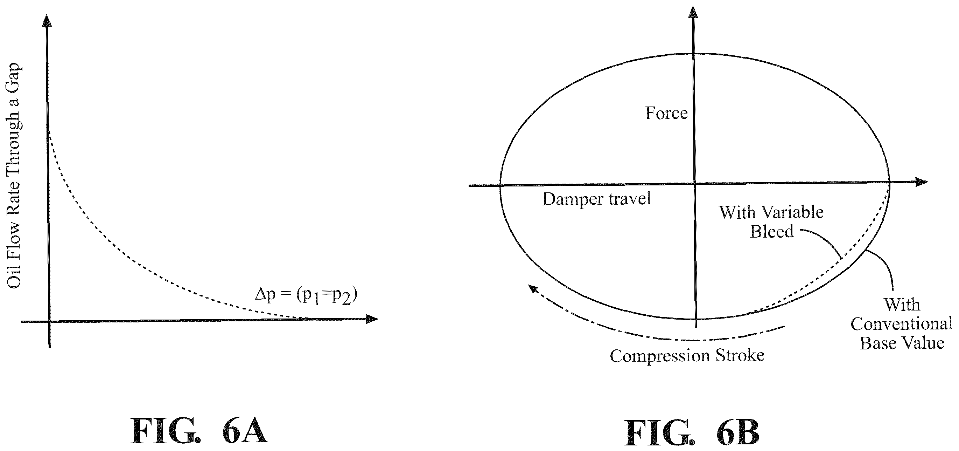

This permits variable oil flow to bleed through the base valve assembly 24 in the initial phase of the damper compression until a certain pressure is achieved in the cylinder. As the pressure raises, intake disc 32 incrementally deflects towards the middle seat 45. The flow depends on this pressure, as shown in Figure 6A. Figure 6B shows the impact of the presented technology on the damper force vs. displacement characteristics.

The middle seat 45 of the base valve assembly 24, with the lowered section or gap 48 relative to the inner 43 and outer 41 seats, provides additional oil flow at low velocity and low pressure for a smoother ride. When the twin-tube damper 10 of the present invention is in an unloaded state, that is, when the pressure is below a predetermined value, a gap 48 exists between that seat and the intake disc 32. The gap 48 defines a variable orifice to allow additional oil flow to dampen the vehicle ride characteristics.

The foregoing invention has been described in accordance with the relevant legal standards. Thus, the description is exemplary rather than limiting in nature. Variations and modifications to the disclosed embodiment may become apparent to those skilled in the art and do come within the scope of the invention. Accordingly, the scope of legal protection afforded this invention can only be determined by studying the following claims.

## Claims

1. A twin-tube damper (10) comprising:
an outer tube (14);
an inner tube (16), said inner tube (16) being positioned within said outer tube (14) creating a chamber between said inner (16) and outer (14) tubes; said inner (16) and outer (14) tubes being configured to hold oil;
a piston (18) and rod (20) adapted for movement within said inner tube (16) in response to driving conditions;
a base valve assembly (24) positioned between said inner tube (16) and outer tube (14), said base valve assembly (24) including a cylinder end (26) having a first end and a second end, said base valve assembly (24) having openings extending through said base valve assembly (24) in fluid communication between said inner tube (16) and said outer tube (14), said cylinder end first end defining a seal surface, an intake disc (32) is mounted adjacent said seal surface, and a compression relief valve assembly (28) positioned adjacent said second end;
said seal surface of said cylinder end (26) has a lowered section (48);
whereby, when pressure is low in said inner tube (16) a gap (48) between said seal surface at said lowered section (48) and said intake disc (32) allows an additional oil flow path through said base valve assembly (24) and said gap (48) is incrementally closed by said intake disc (32) when pressure increases in said inner tube (16).

2. The twin-tube damper (10) of claim 1, wherein said intake disk (32) includes slots (33) for communicating oil between said inner tube (16) and outer tube (14).

3. The twin-tube damper (10) of claim 1 or 2, further including a top seal closing said inner tube (16) and said outer tube (14).

4. The twin-tube damper (10) of claim 3, wherein said base valve assembly (24) is positioned opposite said top seal.

5. The twin-tube damper (10) of any one of claims 1 to 4, wherein said seal surface includes an outer seat (41), inner seat (43) and middle seat (45), said middle seat (45) is lower than said outer seat (41) and said inner seat (43) to define said gap (48).

6. The twin-tube damper (10) of claim 5 wherein said intake disc (32) is mounted adjacent said outer seat (41), inner seat (43) and middle seat (45).

7. The twin-tube damper (10) of any one of claims 1 to 6, further including a fastener connecting said intake disc (32) and said compression relief valve assembly (28) to said cylinder end (26).

8. The twin-tube damper (10) of any one of claims 1 to 7, wherein said openings include windows (38,40) and holes (44, 46).

9. The twin-tube damper (10) of claim 8, wherein said windows (38,40) have sides and said holes (44, 46) are cylindrical.

10. The twin-tube damper (10) of any one of claims 1 to 9, wherein said compression relief valve assembly (28) includes several discs and a bleed disk (30) with slots.

11. The twin-tube damper (10) of any one of claims 5 to 10, wherein said twin-tube damper (10) has a rebound stroke wherein the oil flows through said gap (48) as the pressure difference between the inner tube (16) and outer tube (14) increases due to movement of said piston (18), said intake disc (32) bends towards said middle seat (45), continually reducing the gap (48) until it is completely closed.

12. A base valve assembly (24) for mounting in the twin-tube damper (10) according to any one of claims 1 and 5-9, comprising:
said cylinder end (26) said base valve assembly (24) having said openings extending through said base valve assembly (24) configured to regulate fluid flow;
said seal surface of said base valve assembly (24) has said lowered section (48) creating said gap (48);
whereby, said gap (48) is adapted to incrementally close by said intake disc (32) by pressure increase adjacent said intake disc (32).

13. The base valve assembly of claim 12, wherein said intake disk (32) includes slots (33) configured to communicate oil through said base valve assembly (24).

14. The base valve assembly of claim 12 or 13, wherein said seal surface includes an outer seat (41), inner seat (43) and middle seat (45), said middle seat (45) is lower than said outer seat (41) and said inner seat (43) to define said gap (48), wherein said twin-tube damper (10) has a compression stroke wherein oil flows through the said openings and through said gap (48) as the pressure difference between the inner tube (16) and outer tube (14) increases due to movement of said piston (18), said intake disc (32) bends towards said middle seat (45), continually reducing the gap (48) until it is completely closed as pressure within said twin-tube damper (10) increases.

15. The base valve assembly of claim 14, further including a top seal closing said inner tube (16) and said outer tube (14).
